# EUROPEAN PATENT APPLICATION

(11) **EP 4 620 587 A1**
(43) Date of publication of application: **24.09.2025**
(21) Application number: 23891278.6
(22) Date of filing: 18.10.2023
(51) Int. Cl.: B21B 28/02, B21B 37/74, F16C 13/02, F16N 29/00

(54) **COMPRESSION DEVICE**

(30) Priority: 18.11.2022 JP 2022184702
(71) Applicant: Panasonic Energy Co., Ltd., Osaka 570-8511 (JP)
(72) Inventor: TERASAWA, Fumihiro, Kadoma-shi, Osaka 571-0057 (JP)
(74) Representative: Novagraaf International SA
(86) International application number: PCT/JP2023/037691
(87) International publication number: WO 2024/106122

(57) **Abstract**

A compression apparatus 10 disclosed includes: a compression roll 20 that includes a roll main body 21 and a shaft 22 and that compresses an electrode plate 100 for battery us using the roll main body 21; a bearing 30 of circulating oil supply type that rotatably supports the shaft 22; and a temperature control device 41 or 42 that is connected to the bearing 30 via a pipe 50 and that controls the temperature of the bearing 30 by supplying to the bearing 30 a lubricating oil whose temperature has been adjusted. The temperature control device 41 or 42 is configured to adjust the temperature of the lubricating oil such that a difference between the temperature of the lubricating oil and a target oil temperature, which is determined based on a roll center temperature being the temperature of the central area of the roll main body 21, becomes less than or equal to a first threshold value. With the above configuration, generation of thermal crowns can be suppressed.

## Description

### [Technical Field]

The present disclosure relates to a compression apparatus.

### [Background Art]

Conventionally, a compression apparatus for compressing an electrode plate for battery use has been known (e.g., Patent Literature 1). The compression apparatus of Patent Literature 1 includes a compression roll for compressing the electrode plate, a plurality of bearings for supporting both ends of the compression roll, a lubricating oil temperature adjusting means for adjusting the temperature of a lubricating oil supplied to each bearing, a plurality of temperature sensors for detecting the surface temperatures of the central portion and both ends of the compression roll, and a control means for controlling the lubricating oil temperature adjusting means based on the detection values of the plurality of temperature sensors. Here, the control means controls the lubricating oil temperature control means such that the surface temperature of the central portion of the compression roll and the surface temperature of both ends of the compression roll match each other.

### [Citation List]

### [Patent Literature]

[Patent Literature 1] Japanese Laid-Open Patent Publication No. 2022-41417

### [Summary of Invention]

### [Technical Problem]

However, in the compression apparatus of Patent Literature 1, there is a risk of generating thermal crowns, a phenomenon where the temperature distribution within the compression roll changes its shape, causing its surface to rise and fall. This is because a gradient of the internal temperature may be caused within the compression roll although the surface temperature of the compression roll may be even over the entire length according to the control method described above. For example, when the internal temperature of the central portion of the compression roll is higher than those of both ends of the compression roll even though the surface temperature thereof is equal to the surface temperatures of both ends, thermal expansion at the central portion of the compression roll is relatively large, generating a thermal crown that makes the central portion protrude. When such a thermal crown is generated, the thickness of the electrode plate after compression becomes uneven. To address such a situation, the present disclosure has its object of suppressing generation of thermal crowns.

### [Solution to Problem]

One aspect of the present disclosure relates to a compression apparatus. The compression apparatus includes: a compression roll that includes a roll main body and a shaft and that compresses an electrode plate for battery use using the roll main body; a bearing of circulating oil supply type that rotatably supports the shaft; and a temperature control device that is connected to the bearing via a pipe and that controls a temperature of the bearing by supplying to the bearing a lubricating oil whose temperature has been adjusted, wherein the temperature control device is configured to adjust the temperature of the lubricating oil such that a difference between the temperature of the lubricating oil and a target oil temperature becomes less than or equal to a first threshold value, the target oil temperature being a temperature determined based on a roll center temperature, the roll center temperature being a temperature of a central area of the roll main body.

Another aspect of the present disclosure relates to a compression apparatus. The compression apparatus includes: a compression roll that includes a roll main body and a shaft and that compresses an electrode plate for battery use using the roll main body; a bearing of circulating oil supply type that rotatably supports the shaft; and a temperature control device that is connected to the bearing via a pipe and that controls a temperature of the bearing by supplying to the bearing a lubricating oil whose temperature has been adjusted, wherein the temperature control device is configured to adjust the temperature of the lubricating oil such that a difference between a temperature of the shaft or the temperature of the bearing and a target oil temperature becomes less than or equal to a second threshold value, the target oil temperature being a temperature determined based on a roll center temperature, the roll center temperature being a temperature of a central area of the roll main body.

### [Advantageous Effects of Invention]

According to the present disclosure, generation of thermal crowns can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic configuration diagram of a compression apparatus according to a first embodiment.
[FIG. 2] FIG. 2 is a flowchart depicting a lubricating oil temperature control method according to the first embodiment.
[FIG. 3] FIG. 3 is a schematic configuration diagram of a compression apparatus according to a second embodiment.
[FIG. 4] FIG. 4 is a flowchart depicting a lubricating oil temperature control method according to the second embodiment.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained.

A compression apparatus (hereinafter, also referred to as a compression apparatus A) according to an embodiment of the present disclosure is an apparatus for compressing an electrode plate for battery use (hereinafter, simply referred to as electrode plate), and includes a compression roll, a bearing, and a temperature control device. Note that the battery includes primary batteries such as a lithium primary battery, and secondary batteries such as alkaline storage batteries (e.g., a nickel-hydrogen battery and a nickel-cadmium battery), lithium-ion secondary batteries, lithium-metal secondary batteries, and all-solid-state batteries including a solid-state electrolyte. In the present disclosure, power storage devices (e.g., a lithium-ion capacitor) in which at least one of the positive electrode and the negative electrode is an electrode that expresses its capacity by the Faraday reaction also belong to the category of the secondary battery.

The compression roll includes a roll main body and a shaft, and it compresses the electrode plate for battery use using the roll main body. The roll main body may be supported by the shaft. The electrode plate may have a coated portion, which is a part of a surface a substate (current collector plate) where an active material layer is formed, and a foil exposed portion (uncoated portion), which is another part of the surface of the substrate where the active material layer is not formed. The compression roll may compress the coated portion of the electrode plate using the roll main body. The compression roll may include a pair of rolls placed at a predetermined interval. The compression roll may be configured to compress the uncoated portion of the electrode plate in addition to the coated portion of the electrode plate. Typically, in a case in which an electrode plate including an active material layer formed by intermittently applying a mixture slurry to a substrate is compressed by a compression roll, the uncoated portions of the electrode plate are compressed. In an electrode plate of this type, the coated portions are intermittently formed in the longitudinal direction of the substrate, and the uncoated portions between the adj acent coated portions are compressed by the compression roll.

The bearing is a bearing of circulating oil supply type that rotatably supports the shaft of the compression roll. The bearing may be a rolling bearing of circulating oil supply type.

The temperature control device is connected to the bearing via a pipe. The temperature control device controls the temperature of the bearing by supplying to the bearing a lubricating oil whose temperature has been controlled. The temperature control device may include a heating unit for heating the lubricating oil and a cooling unit for cooling the lubricating oil. The heating unit may include a resistance heater for heating the lubricating oil, for example. The cooling unit may include a refrigerant evaporator for cooling the lubricating oil, for example. The temperature control device may include a circulation apparatus (e.g., a pump) for circulating the lubricating oil.

The temperature control device is configured to adjust the temperature of the lubricating oil such that a difference between the temperature of the lubricating oil and a target oil temperature becomes less than or equal to a first threshold value. Here, the target oil temperature is a temperature determined based on a roll center temperature. The roll center temperature is the temperature of the central area of the roll main body. The temperature of the lubricating oil may be the temperature of the lubricating oil flowing out of the temperature control device, the temperature of the lubricating oil flowing into the temperature control device, or the temperature of the lubricating oil at another location in the lubricating oil circulation path. The central area of the roll main body is defined as the area within 50% of the total length, measured from the center in the longitudinal direction (or the axial direction) of the roll main body. In particular, the central area of the roll main body is preferably an area that comes into contact with the electrode plate. The target oil temperature may be the roll center temperature or a temperature obtained by adding a predetermined value (any positive or negative value) to the roll center temperature. The first threshold value may be 0.2°C or higher and 0.5°C or lower, for example.

In the compression apparatus A having the above configuration, when the target oil temperature is the roll center temperature, the temperature of the shaft becomes substantially the same as the temperature of the roll main body by the heating action or the cooling action of the lubricating oil flowing through the bearing. That is, the temperature is substantially even throughout the compression roll. As a result, generation of thermal crowns can be suppressed. When the target oil temperature is a temperature obtained by adding the predetermined value to the roll center temperature in the compression apparatus A by contrast, a difference corresponding to the predetermined value is generated between the temperature of the shaft and the temperature of the roll main body by the heating action or the cooling action of the lubricating oil flowing through the bearing. Thus, desired thermal crowns can be generated as well. For example, by slightly expanding the central area of the roll main body, a portion of the electrode plate coming into contact with the central area can be made thinner than the other portions.

The temperature control device may be configured to adjust the temperature of the lubricating oil to a first target temperature when a difference (hereinafter, also referred to as first temperature deviation) between the roll center temperature and the first target temperature is less than or equal to the first threshold value, and adjust the temperature of the lubricating oil to a second target temperature that is obtained by adding the difference (first temperature deviation) between the roll center temperature and the first target temperature to the first target temperature when the difference (first temperature deviation) between the roll center temperature and the first target temperature exceeds the first threshold value. In the former situation, generation of thermal crowns can be sufficiently suppressed by the lubricating oil whose temperature has been adjusted to the first target temperature. This is because heat transfer within the compression roll is reduced when a difference between the roll center temperature and the temperature of the lubricating oil (temperature very close to the temperature of the shaft) is small. In the latter situation by contrast, generation of thermal crowns may not be sufficiently suppressed by the lubricating oil whose temperature has been adjusted to the first target temperature. This is because, an unignorable temperature gradient is generated within the compression roll to cause heat transfer within the compression roll when the difference between the roll center temperature and the temperature of the lubricating oil is large. In view of the foregoing, the above configuration reduces the temperature gradient within the compression roll in the latter situation in a manner that the difference between the roll center temperature and the temperature of the lubricating oil is reduced by adjusting the temperature of the lubricating oil to the second target temperature that is obtained by adding the first temperature deviation to the first target temperature. As a result, generation of thermal crowns can be sufficiently suppressed.

A compression apparatus (hereinafter also referred to as compression apparatus B) according to another embodiment of the present disclosure is an apparatus for compressing an electrode plate for battery use that includes a compression roll, a bearing, and a temperature control device.

The compression roll may be the same as that of the compression apparatus A.

The bearing may be the same as that of the compression apparatus A.

The temperature control device is connected to the bearing via a pipe. The temperature control device controls the temperature of the bearing by supplying to the bearing a lubricating oil whose temperature has been controlled. The temperature control device may include a heating unit for heating the lubricating oil, a cooling unit for cooling the lubricating oil, and a circulation apparatus for circulating the lubricating oil.

The temperature control device is configured to adjust the temperature of the lubricating oil such that a difference between the temperature of the shaft or the bearing and a target oil temperature becomes less than or equal to a second threshold value. Here, the target oil temperature is a temperature determined based on a roll center temperature. The roll center temperature is a temperature of the central area of the roll main body. The temperature of the shaft or the bearing may be the temperature of a part of the shaft located close to the bearing or may be the temperature of the shaft box that houses the bearing. The target oil temperature may be the roll center temperature or a temperature obtained by adding a predetermined value (any positive or negative value) to the roll center temperature. The second threshold value may be 0.2°C or higher and 0.5°C or lower, for example.

Also, in the compression apparatus B having the above configuration, the same operation and action as those of the compression apparatus A can be obtained. That is, generation of thermal crowns can be suppressed, or a desired thermal crown can be generated.

The temperature control device may be configured to adjust the temperature of the lubricating oil to a third target temperature when a difference (hereinafter, also referred to as second temperature deviation) between the roll center temperature and the third target temperature is less than or equal to the second threshold value, and adjust the temperature of the lubricating oil to a fourth target temperature that is obtained by adding the difference (second temperature deviation) between the roll center temperature and the third target temperature to the third target temperature when the difference (second temperature deviation) between the roll center temperature and the third target temperature exceeds the second threshold value. In the former situation, generation of thermal crowns can be sufficiently suppressed by the lubricating oil whose temperature has been adjusted to the third target temperature. This is because heat transfer within the compression roll is reduced when the difference between the roll center temperature and the temperature of the lubricating oil (the temperature very close to the temperature of the shaft) is small. In the latter situation by contrast, generation of thermal crowns may not be sufficiently suppressed by the lubricating oil whose temperature has been adjusted to the third target temperature. This is because an unignorable temperature gradient is generated within the compression roll to cause heat transfer within the compression roll when the difference between the roll center temperature and the temperature of the lubricating oil is large. In view of the foregoing, the above configuration reduces the temperature gradient within the compression roll in a manner that the difference between the roll center temperature and the temperature of the lubricating oil is reduced in the latter situation by adjusting the temperature of the lubricating oil to the fourth target temperature that is obtained by adding the second temperature deviation to the third target temperature. As a result, generation of thermal crowns can be sufficiently suppressed.

According to the present disclosure, generation of thermal crowns can be suppressed by making the temperature substantially even over the entire compression roll as described above. Further, desired thermal crowns can be generated by changing the target oil temperature in the present disclosure.

Hereinafter, examples of the compression apparatus according to the present disclosure will be specifically described with reference to the drawings. The elements of configuration described above are applicable to elements of configuration of the exemplary compression apparatuses described below. The elements of configuration of the exemplary compression apparatuses described below can be altered based on the above description. Further, the matters described below may be applied to the above-described embodiment. Among the elements of configuration of the exemplary compression apparatuses described below, an element of configuration that is not essential to the compression apparatus according to the present disclosure may be omitted. It should be noted that the drawings indicated below are schematic and do not accurately reflect the shape or number of actual members.

### <<First Embodiment>>

The following describes a first embodiment of the present disclosure. A compression apparatus 10 of the present embodiment is an apparatus for compressing an electrode plate 100 for battery (e.g., lithium-ion secondary battery) use (hereinafter, also referred to simply as electrode plate 100). Although not illustrated, the electrode plate 100 has a coated portion, which is a part of a surface of a substate (current collector) where an active material layer is formed, and a foil exposed portion (uncoated portion), which is another part of the surface of the substrate where the active material layer is not formed.

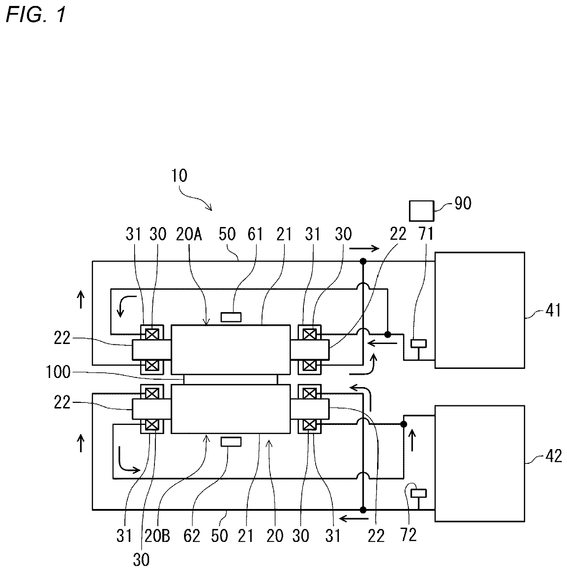

As illustrated in FIG. 1, the compression apparatus 10 includes compression rolls 20, a plurality of bearings 30, a first temperature control device 41, a second temperature control device 42, a first roll temperature sensor 61, a second roll temperature sensor 62, a first oil temperature sensor 71, a second oil temperature sensor 72, and a control unit 90.

The compression rolls 20 include a pair of rolls 20A and 20B, between which the electrode plate 100 for battery use (specifically, the coated portion of the electrode plate 100) is compressed. Each compression roll 20 includes a roll main body 21 that compresses the electrode plate 100 and a shaft 22 that supports the roll main body 21.

The plurality of (in this example, four) bearings 30 rotatably support the shaft 22 of the compression roll 20. Each of the bearings 30 is a bearing of circulating oil supply type. Each of the bearings 30 may be a rolling bearing of circulating oil supply type, for example. Each bearing 30 is individually housed in a bearing box 31.

The first temperature control device 41 is connected via a pipe 50 to bearings 30 that support the shaft 22 of one roll 20A (upper roll 20A in FIG. 1) of the rolls. The first temperature control device 41 controls the temperature of the bearings 30 by supplying the temperature-adjusted lubricating oil to the bearings 30. Specifically, the first temperature control device 41 is configured to adjust the temperature of the lubricating oil such that a difference between the temperature of the lubricating oil and a target oil temperature becomes less than or equal to a first threshold value. Here, the target oil temperature is a temperature (the roll center temperature) of the central area of the roll main body 21 of the one roll 20A. The first temperature control device 41 is an example of a temperature control device. The target oil temperature may be a temperature obtained by adding a predetermined value to the roll center temperature.

The second temperature control device 42 is connected via a pipe 50 to bearings 30 that support the shaft 22 of the other roll 20B (lower roll 20B in FIG. 1). The second temperature control device 42 controls the temperature of the bearings 30 by supplying the temperature-adjusted lubricating oil to the bearings 30. Specifically, the second temperature control device 42 is configured to adjust the temperature of the lubricating oil such that the difference between the temperature of the lubricating oil and a target oil temperature becomes less than or equal to the first threshold value. Here, the target oil temperature is the roll center temperature of the other roll 20B. The second temperature control device 42 is an example of a temperature control device. The target oil temperature may be a temperature obtained by adding a predetermined value to the roll center temperature.

The first roll temperature sensor 61 detects the roll center temperature of the one roll 20A. Preferably, the first roll temperature sensor 61 detects the surface temperature at the axial center of the one roll 20A as the roll center temperature. The first roll temperature sensor 61 may be a non-contact temperature sensor or a contact temperature sensor. Data of the roll center temperature detected by the first roll temperature sensor 61 is sent to the control unit 90.

The second roll temperature sensor 62 detects the roll center temperature of the other roll 20B. Preferably, the second roll temperature sensor 62 detects the surface temperature at the axial center of the other roll 20B as the roll center temperature. The second roll temperature sensor 62 may be a non-contact temperature sensor or a contact temperature sensor. Data of the roll center temperature detected by the second roll temperature sensor 62 is sent to the control unit 90.

The first oil temperature sensor 71 detects the temperature (hereinafter, also referred to as first outflow temperature) of the lubricating oil flowing out of the first temperature control device 41. The first oil temperature sensor 71 may detect the temperature of a point of the pipe 50 located in the vicinity of the outlet of the first temperature control device 41 as an outflow temperature. The first oil temperature sensor 71 may be a contact temperature sensor or a non-contact temperature sensor. Data of the first outflow temperature detected by the first oil temperature sensor 71 is sent to the control unit 90. Note that the first oil temperature sensor 71 may detect the temperature of the lubricating oil flowing into the first temperature control device or may detect the temperature of the lubricating oil at any point of the lubricating oil flow path corresponding to the first temperature control device 41.

The second oil temperature sensor 72 detects the temperature (hereinafter, also referred to as second outflow temperature) of the lubricating oil flowing out of the second temperature control device 42. The second oil temperature sensor 72 may detect the temperature of a point of the pipe 50 located in the vicinity of the outlet of the second temperature control device 42 as an outflow temperature. The second oil temperature sensor 72 may be a contact temperature sensor or a non-contact temperature sensor. Data of the second outflow temperature detected by the second oil temperature sensor 72 is sent to the control unit 90. Note that the second oil temperature sensor 72 may detect the temperature of the lubricating oil flowing into the second temperature control device 42 or may detect the temperature of the lubricating oil at any point of the lubricating oil flow path corresponding to the second temperature control device 42.

The control unit 90 controls the operation of each component of the compression apparatus 10. For example, the control unit 90 controls the operations of the first temperature control device 41 and the second temperature control device 42 based on the data sent from the first roll temperature sensor 61, the second roll temperature sensor 62, the first oil temperature sensor 71, and the second oil temperature sensor 72. The control unit 90 includes an arithmetic device and a storage device that stores therein programs executable by the arithmetic device.

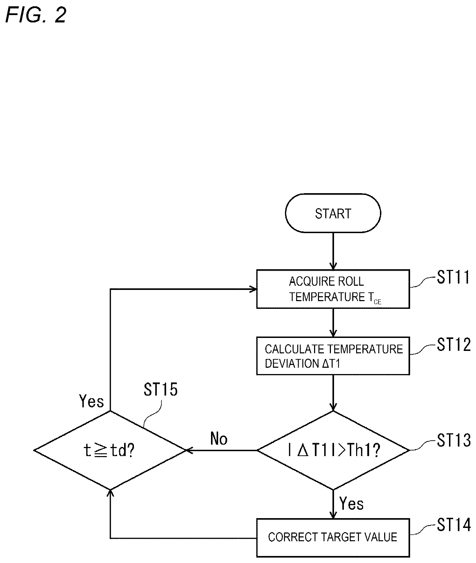

Next, an example of a lubricating oil control temperature method will be described with reference to FIG. 2.

First at Step ST11, the control unit 90 acquires roll center temperatures T_{CE}. The roll center temperature T_{CE} of the one roll 20A can be obtained using the first roll temperature sensor 61. The roll center temperature T_{CE} of the other roll 20B can be obtained using the second roll temperature sensor 62. Further, the control unit 90 after acquiring the roll center temperatures T_{CE} starts a temperature acquisition timer that measures elapsed time. Subsequently, the process proceeds to Step ST12.

At Step ST12, the control unit 90 calculates a first temperature deviation ΔT1. The first temperature deviation ΔT1 is a difference (ΔT1 = T_{CE} - Tₜ₁) between each roll center temperature T_{CE} and a first target temperature Tₜ₁. The first target temperature Tₜ₁ is used as a target temperature of the lubricating oil to be supplied to the bearings 30. The first target temperature Tₜ₁ may be an average of the roll center temperatures T_{CE} of the respective rolls 20A and 20B. Subsequently, the process proceeds to Step ST13.

At Step ST13, the control unit 90 determines whether or not the absolute value of the first temperature deviation ΔT1 is greater than a first threshold value Th1. If the absolute value is greater than the first threshold value Th1, the process proceeds to Step ST14. If the absolute value is less than or equal to the first threshold value Th1 by contrast, the process proceeds to Step ST15. If the absolute value is less than or equal to the first threshold value Th1, the control unit 90 controls the first temperature control device 41 and the second temperature control device 42 such that the temperature of the lubricating oil becomes the first target temperature Tₜ₁.

At Step ST14, the control unit 90 performs target value correction. Specifically, the control unit 90 corrects the target temperature of the lubricating oil from the first target temperature Tₜ₁ to a second target temperature Tₜ₂ (Tₜ₂ = Tₜ₁ + ΔT1) that is obtained by adding the first temperature deviation ΔT1 thereto. In this case, the control unit 90 controls the first temperature control device 41 and the second temperature control device 42 such that the temperature of the lubricating oil becomes the second target temperature Tₜ₂. Subsequently, the process proceeds to Step ST15.

At Step ST15, the control unit 90 waits until the next temperature acquisition timing. Specifically, the control unit 90 waits until a measurement value t of the temperature acquisition timer having started at Step ST11 becomes greater than or equal to a predetermined time threshold td, and the process returns to Step ST11 when the condition of t ≥ td is satisfied. The time threshold td may be 0.5 minutes or more and 10 minutes or less, for example. Thereafter, Steps from ST11 to Step ST15 are repeated.

### <<Second Embodiment>>

The following describes a second embodiment of the present disclosure. A compression apparatus 10 of the present embodiment differs from that of the first embodiment in the configuration of the temperature sensor system. Hereinafter, differences from the first embodiment will be mainly described.

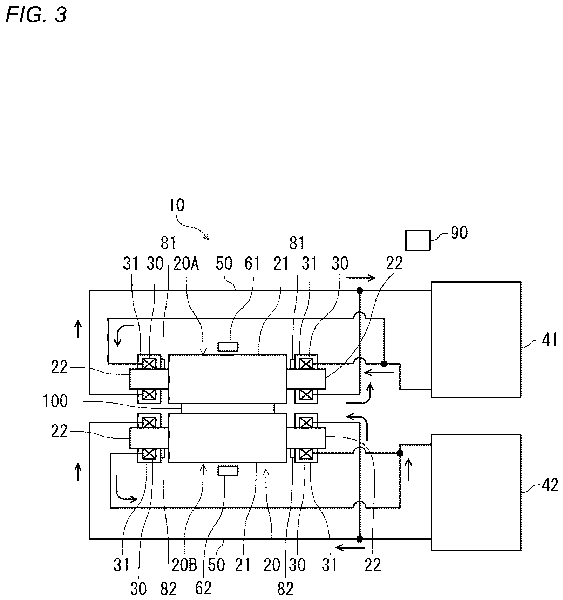

As illustrated in FIG. 3, the compression apparatus 10 of the present embodiment includes a plurality of first bearing temperature sensors 81 and a plurality of second bearing temperature sensors 82.

The plurality of (in this case, two) first bearing temperature sensors 81 are provided at bearing boxes 31 accommodating the bearings 30 corresponding to the one roll 20A or at points of the shaft 22 of the one roll 20A located in the vicinity of the bearing boxes 31. The first bearing temperature sensors 81 detect the temperature of the bearings 30 corresponding to the one roll 20A or the temperature of the shaft 22 of the one roll 20A. The first bearing temperature sensors 81 may each be a non-contact temperature sensor or a contact temperature sensor. Data of the temperatures detected by the first bearing temperature sensors 81 is sent to the control unit 90.

Th plurality of (in this case, two) second bearing temperature sensors 82 are provided at bearing boxes 31 accommodating the bearings 30 corresponding to the other roll 20B or at points of the shaft 22 of the other roll 20B located in the vicinity of the bearing boxes 31. The second bearing temperature sensors 82 detect the temperature of the bearings 30 corresponding to the other roll 20B or the temperature of the shaft 22 of the other roll 20B. The second bearing temperature sensors 82 may each be a non-contact temperature sensor or a contact temperature sensor. Data of the temperatures detected by the second bearing temperature sensors 82 is sent to the control unit 90.

The control unit 90 controls the operations of the first temperature control device 41 and the second temperature control device 42 based on the data sent from the first roll temperature sensor 61, the second roll temperature sensor 62, the first bearing temperature sensor 81, and the second bearing temperature sensor 82.

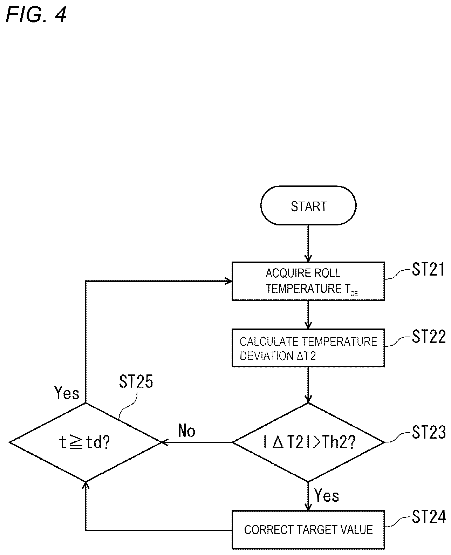

Next, an example of a lubricating oil temperature control method will be described with reference to FIG. 4.

First at Step ST21, the control unit 90 acquires roll center temperatures T_{CE}. The roll center temperature T_{CE} of the one roll 20A can be obtained using the first roll temperature sensor 61. The roll center temperature T_{CE} of the other roll 20B can be obtained using the second roll temperature sensor 62. Further, the control unit 90 after acquiring the roll center temperatures T_{CE} starts a temperature acquisition timer that measures elapsed time. Subsequently, the process proceeds to Step ST22.

At Step ST22, the control unit 90 calculates a second temperature deviation ΔT2. The second temperature deviation ΔT2 is a difference (ΔT2 = T_{CE} - Tₜ₃) between each roll center temperature T_{CE} and a third target temperature Tₜ₃. The third target temperature Tₜ₃ is used as a target temperature of the lubricating oil to be supplied to the bearings 30. The third target temperature Tₜ₃ may be an average of the roll center temperatures T_{CE} of the respective rolls 20A and 20B. Subsequently, the process proceeds to Step ST23.

At Step ST23, the control unit 90 determines whether or not the absolute value of the second temperature deviation ΔT2 is greater than a second threshold value Th2. If the absolute value is greater than the second threshold value Th2, the process proceeds to Step ST24. If the absolute value is less than or equal to the second threshold value Th2 by contrast, the process proceeds to Step ST25. If the absolute value is less than or equal to the second threshold value Th2, the control unit 90 controls the first temperature control device 41 and the second temperature control device 42 such that the temperature of the lubricating oil becomes the third target temperature Tt3.

At Step ST24, the control unit 90 corrects the target value. Specifically, the control unit 90 corrects the target temperature of the lubricating oil from the third target temperature T₁₃ to a fourth target temperature Tₜ₄ (Tₜ₄ = Tₜ₃ + ΔT2) that is obtained by adding the second temperature deviation ΔT2 thereto. In this case, the control unit 90 controls the first temperature control device 41 and the second temperature control device 42 such that the temperature of the lubricating oil becomes the fourth target temperature Tₜ₄. Subsequently, the process proceeds to Step ST25.

At Step ST25, the control unit 90 waits until the next temperature acquisition timing. Specifically, the control unit 90 waits until a measurement value t of the temperature acquisition timer having started at Step ST21 becomes greater than or equal to the predetermined time threshold td, and the process returns to Step ST21 when the condition of t ≥ td is satisfied. The time threshold td may be 0.5 minutes or more and 10 minutes or less, for example. Thereafter, Steps from ST21 to Step ST25 are repeated.

### <<Supplemental Remarks>>

According to the above description of the above embodiments, the following techniques are disclosed.

### (Technique 1)

A compression apparatus including:
a compression roll that includes a roll main body and a shaft and that compresses an electrode plate for battery use using the roll main body;
a bearing of circulating oil supply type that rotatably supports the shaft; and
a temperature control device that is connected to the bearing via a pipe and that controls a temperature of the bearing by supplying to the bearing a lubricating oil whose temperature has been adjusted, wherein
the temperature control device is configured to adjust the temperature of the lubricating oil such that a difference between the temperature of the lubricating oil and a target oil temperature becomes less than or equal to a first threshold value, the target oil temperature being a temperature determined based on a roll center temperature, the roll center temperature being a temperature of a central area of the roll main body.

### (Technique 2)

The compression apparatus according to Technique1, wherein
the temperature control device is configured to adjust:
the temperature of the lubricating oil to a first target temperature when a difference between the roll center temperature and the first target temperature is less than or equal to the first threshold value, and
the temperature of the lubricating oil to a second target temperature when the difference between the roll center temperature and the first target temperature exceeds the first threshold value, the second target temperature being a temperature obtained by adding the difference between the roll center temperature and the first target temperature to the first target temperature.

### (Technique 3)

A compression apparatus including:
a compression roll that includes a roll main body and a shaft and that compresses an electrode plate for battery use using the roll main body;
a bearing of circulating oil supply type that rotatably supports the shaft; and
a temperature control device that is connected to the bearing via a pipe and that controls a temperature of the bearing by supplying to the bearing a lubricating oil whose temperature has been adjusted, wherein
the temperature control device is configured to adjust the temperature of the lubricating oil such that a difference between a temperature of the shaft or the temperature of the bearing and a target oil temperature becomes less than or equal to a second threshold value, the target oil temperature being a temperature determined based on a roll center temperature, the roll center temperature being a temperature of a central area of the roll main body.

### (Technique 4)

The compression apparatus according to Technique 2, wherein
the temperature control device is configured to adjust:
the temperature of the lubricating oil to a third target temperature when a difference between the roll center temperature and the third target temperature is less than or equal to the second threshold value; and
the temperature of the lubricating oil to a fourth target temperature when the difference between the roll center temperature and the third target temperature exceeds the second threshold value, the fourth target temperature being a temperature obtained by adding the difference between the roll center temperature and the third target temperature to the third target temperature.

### (Technique 5)

The compression apparatus according to any one of Techniques 1 to 4, wherein the target oil temperature is the roll center temperature.

### (Technique 6)

The compression apparatus according to any one of Techniques 1 to 4, wherein the target oil temperature is a temperature obtained by adding a predetermined value to the roll center temperature.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be used for compression apparatuses.

### [Reference Signs List]

10: Compression apparatus
   20: Compression roll
   20A: One roll (upper roll)
   20B: Other role (lower role)
      21: Roll main body
      22: Shaft
   30: Bearing
   31: Bearing box
   41: First temperature control device (temperature control device)
   42: Second temperature control device (temperature control device)
   50: Pipe
   61: First roll temperature sensor
   62: Second roll temperature sensor
   71: First oil temperature sensor
   72: Second oil temperature sensor
   81: First bearing temperature sensor
   82: Second bearing temperature sensor
   90: Control unit
100: Electrode plate

## Claims

1. A compression apparatus comprising:
a compression roll that includes a roll main body and a shaft and that compresses an electrode plate for battery use using the roll main body;
a bearing of circulating oil supply type that rotatably supports the shaft; and
a temperature control device that is connected to the bearing via a pipe and that controls a temperature of the bearing by supplying to the bearing a lubricating oil whose temperature has been adjusted, wherein
the temperature control device is configured to adjust the temperature of the lubricating oil such that a difference between the temperature of the lubricating oil and a target oil temperature becomes less than or equal to a first threshold value, the target oil temperature being a temperature determined based on a roll center temperature, the roll center temperature being a temperature of a central area of the roll main body.

2. The compression apparatus according to claim 1, wherein
the temperature control device is configured to adjust:
the temperature of the lubricating oil to a first target temperature when a difference between the roll center temperature and the first target temperature is less than or equal to the first threshold value; and
the temperature of the lubricating oil to a second target temperature when the difference between the roll center temperature and the first target temperature exceeds the first threshold value, the second target temperature being a temperature obtained by adding the difference between the roll center temperature and the first target temperature to the first target temperature.

3. A compression apparatus comprising:
a compression roll that includes a roll main body and a shaft and that compresses an electrode plate for battery use using the roll main body;
a bearing of circulating oil supply type that rotatably supports the shaft; and
a temperature control device that is connected to the bearing via a pipe and that controls a temperature of the bearing by supplying to the bearing a lubricating oil whose temperature has been adjusted, wherein
the temperature control device is configured to adjust the temperature of the lubricating oil such that a difference between a temperature of the shaft or the temperature of the bearing and a target oil temperature becomes less than or equal to a second threshold value, the target oil temperature being a temperature determined based on a roll center temperature, the roll center temperature being a temperature of a central area of the roll main body.

4. The compression apparatus according to claim 3, wherein
the temperature control device is configured to adjust:
the temperature of the lubricating oil to a third target temperature when a difference between the roll center temperature and the third target temperature is less than or equal to the second threshold value; and
the temperature of the lubricating oil to a fourth target temperature when the difference between the roll center temperature and the third target temperature exceeds the second threshold value, the fourth target temperature being a temperature obtained by adding the difference between the roll center temperature and the third target temperature to the third target temperature.

5. The compression apparatus according to claim 1 or 3, wherein
the target oil temperature is the roll center temperature.

6. The compression apparatus according to claim 1 or 3, wherein
the target oil temperature is a temperature obtained by adding a predetermined value to the roll center temperature.
